# EUROPEAN PATENT SPECIFICATION

(11) **EP 3 220 596 B1**
(45) Date of publication and mention of the grant of the patent: **26.12.2018**
(21) Application number: 16191875.0
(22) Date of filing: 30.09.2016
(51) Int. Cl.: H04L 29/06, G06F 21/57

(54) **METHOD AND SYSTEM OF ELIMINATING VULNERABILITIES OF A ROUTER**
VERFAHREN UND SYSTEM ZUR BESEITIGUNG VON SCHWACHSTELLEN EINES ROUTERS
PROCÉDÉ ET SYSTÈME DESTINÉS À ÉLIMINER LES VULNÉRABILITÉS D'UN ROUTEUR

(30) Priority: 18.03.2016 RU 2016109930; 06.05.2016 US 201615148153
(43) Date of publication of application: 20.09.2017
(73) Proprietor: AO Kaspersky Lab, Moscow 125212 (RU)
(72) Inventor: Rusakov, Vyacheslav E., 125212 Moscow (RU); Janus, Marta Anna, 125212 Moscow (RU)
(74) Representative: Chimini, Francesco

(56) References cited:
- US-A1- 2015 033 350
- US-B1- 7 073 198
- NIEMIETZ MARCUS ET AL: "Not so Smart: On Smart TV Apps", 2015 INTERNATIONAL WORKSHOP ON SECURE INTERNET OF THINGS (SIOT), IEEE, 21 September 2015 (2015-09-21), pages 72-81, XP032866852, DOI: 10.1109/SIOT.2015.13 [retrieved on 2016-02-17]
- MIN BYUNGHO ET AL: "Design and Evaluation of Feature Distributed Malware Attacks against the Internet of Things (IoT)", 2015 20TH INTERNATIONAL CONFERENCE ON ENGINEERING OF COMPLEX COMPUTER SYSTEMS (ICECCS), IEEE, 9 December 2015 (2015-12-09), pages 80-89, XP032851010, DOI: 10.1109/ICECCS.2015.19 [retrieved on 2016-01-15]

## Description

### Field of Technology

The present disclosure relates generally to the field of computer security and antivirus technologies, and more specifically, to a system and method of eliminating vulnerabilities of smart devices having Internet access.

### Background

At present, an ever increasing number of devices are connected to the Internet from computers and smartphones of users to more commonplace things, such as television sets and refrigerators. When new types of devices are connected to the Internet, they take on the adjective "Smart" (such as a Smart TV), which serves for marketing purposes. When smart devices are connected to the Internet, the users become able to update the devices as such, monitor the operating status of the device (such as a refrigerator), and integrate the device itself into a so-called "smart home" concept. This concept makes it possible to control such smart devices from a single point by checking the operating status of such devices and adjusting it to one's own personal needs. The concept of a "smart home" also involves another concept known as the Internet of Things (IoT), which implies an interaction of the aforementioned things even without direct human involvement.

One of the first devices to appear among users was the router, which made it possible to create a wireless home network, today making it possible to connect other smart devices to the Internet. At present, many routers support the possibility of creating so-called heterogeneous networks. As an example, one can mention a network of smart devices, some of which are connected to a router via a wireless Wi-Fi network, and others through Bluetooth.

Not surprisingly, with the growth in the number of devices having a network interaction capability, there has also begun to grow the number of attempts to use such devices maliciously. Upon obtaining access to a router with administrator rights, it becomes possible to check the network traffic going through the router. Upon gaining access to such devices as a "smart watch", it becomes possible to check the data on devices paired with this watch (e.g., by smartphone). All of these actions can lead to theft or substitution of data.

US2015033350 A1 discloses a system and a method in which at least one server includes at least one first data storage that stores potential vulnerability information describing a plurality of potential vulnerabilities, a vulnerability component including at least one second data storage for storing actual vulnerability information, and an intrusion prevention component operable for a variety of functionality. An analysis of the conventional security systems indicates many are ineffective and, in some cases, not possible to use the previous technologies, whose drawbacks are solved by the present disclosure that eliminates the vulnerabilities of devices having Internet access.

### Summary

Disclosed are systems and methods for eliminating vulnerabilities of smart devices connected to a data network. According to one example, the method includes identifying, by a processor, a router configured to provide access to the data network; obtaining access to the network by the processor; transmitting, by the processor, a request through the data network to obtain access to at least one smart device communicatively coupled to the router; accessing the at least one smart device to obtain settings of the at least one smart device; comparing, in a database, each of the settings of the at least one smart device with settings of known vulnerabilities to identify at least one network vulnerability associated with at least one of the settings of the at least one smart device; determining, by the processor, an action for repairing the at least one network vulnerability associated with the at least one setting of the at least one smart device; and transmitting instructions to the at least one smart device to perform the action for repairing the at least one network vulnerability associated with the at least one setting of the at least one smart device.

According to one example, the method further includes accessing, by the processor, a web interface of the at least one smart device by obtaining a web page and parsing elements of the web page based on a document object model; and using the web interface of the at least one smart device to obtain the settings of the at least one smart device.

According to another example, the method further includes transmitting instructions to the at least one smart device to repairing the at least one network vulnerability by adjusting the settings of a file of the at least one smart device by changing the file.

According to another example, the method further includes transmitting instructions to the at least one smart device to repair the at least one network vulnerability by adjusting through the web interface of the at least one smart device.

According to another example, the accessing, by the processor, of the at least one smart device comprises at least one of obtaining web access to the at least one smart device, accessing the at least one smart device through a universal plug and play protocol, accessing the at least one smart device through a file transfer by a network address of the at least one smart device in the data network; accessing the at least one smart device through a remote administration protocol, and accessing the at least one smart device by a secure shell protocol.

According to another example, the transmitting of the request through the data network comprises transmitting the request to the router that redirects the request to a plurality of smart devices communicatively coupled to the data network via the router.

According to another example, the accessing of the at least one smart device to obtain the settings of the at least one smart device includes using a UPnP (Universal Plug-and-Play) protocol to obtain the settings.

According to one example, a system for eliminating vulnerabilities of smart devices connected to a data network comprises: at least one database that stores settings of devices relating to network vulnerabilities and actions for repairing the network vulnerabilities; and a processor configured to: identify a router configured to provide access to the data network, obtain access to the network, transmit a request through the data network to obtain access to at least one smart device communicatively coupled to the router, access the at least one smart device to obtain settings of the at least one smart device, compare, in the least one database, each of the settings of the at least one smart device with the settings of devices of known vulnerabilities to identify at least one network vulnerability associated with at least one of the settings of the at least one smart device, determine an action for repairing the at least one network vulnerability associated with the at least one setting of the at least one smart device, and transmit instructions to the at least one smart device to perform the action for repairing the at least one network vulnerability associated with the at least one setting of the at least one smart device.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplary pointed out in the claims.

### Brief Description of the Drawings

**Fig. 1** illustrates an example of a computer attack on a router.
**Fig. 2** shows an example of a computer attack on smart devices.
**Fig. 3** shows a block diagram of an example system for eliminating vulnerabilities of devices having access to the Internet.
**Fig. 4** shows a block diagram of an example system with smart devices for eliminating vulnerabilities of devices having access to the Internet.
**Fig. 5** shows a flowchart of an example method for eliminating vulnerabilities of devices having access to the Internet.
**Fig. 6** shows an example of a DOM model for a HTML page.
**Fig. 7** illustrates an example of a general-purpose computer system on which the disclosed systems and method can be implemented.

The accompanying drawings, which are incorporated into and constitute a part of this specification, illustrate one or more example aspects of the present disclosure and, together with the detailed description, serve to explain their principles and implementations.

### Detailed Description

Example aspects are described herein in the context of a system, method and computer program product for eliminating vulnerabilities of smart devices having Internet access. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

For purposes of this disclosure, the term "smart device" is used to describe to devices, such as everyday items including, for example, watches, lights, cameras, Dictaphones, wristbands, heart rate monitors, and others having access to the Internet (or a local area network) through various kinds of connections, such as Wi-Fi or Bluetooth. Such devices create network connections, receive and process incoming traffic, and have a separate interface for the interaction (an API, or Application Programmable Interface), which makes it possible not only to monitor the parameters of the device, but also set them.

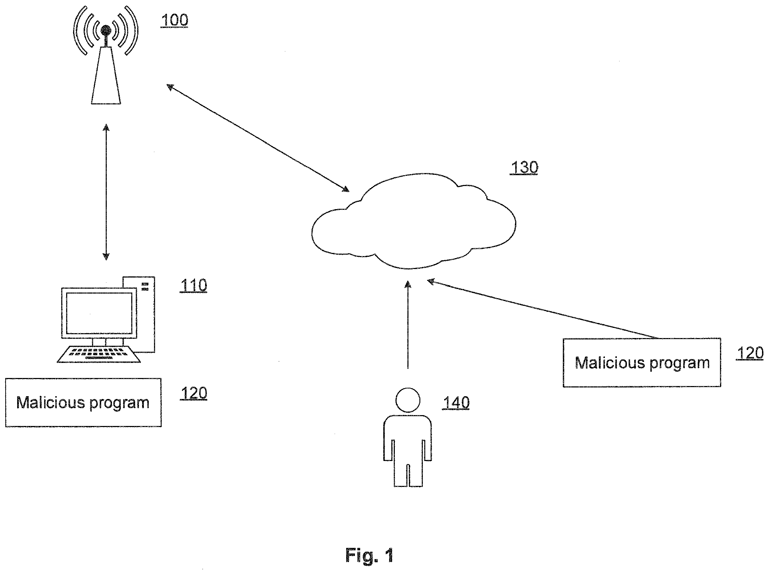

**Fig. 1** illustrates an example of a computer attack on a router. A router **100** is hooked up to both a computer **110** (for example, via Ethernet or Wi-Fi) and to the Internet **130.** The router has the following access options:
- Web access. As a rule, this is the page http://192.168.0.1, where after entering the login and password of the administrator the user obtains access to the settings of the router.
- Access to the settings/variables file. Routers have their own file system and store the settings in configuration files, making it possible to change them if a user knows how to gain access to such a file.
- Access using various utilities. For example, the utility fdbrowser, which is part of the Microsoft SDK, lets one use the protocol UPnP (Universal Plug-and-Play) to obtain access to the router settings and change them.

Not surprisingly, with such an array of access options to such an important element of the local area network as a router interests hackers. For example, many users do not change the default password of the administrator, so web access to the router is vulnerable. Hackers have many option for the use of a router for their own purposes:
- Interception of traffic. For example, interception of transactions, carrying out MitM (Man in the Middle) attacks.
- Installing of backdoors for later control of the router and its configuration. The router can be used as a proxy server or be involved in a DDoS attack.
- DNS hijacking.

One can realize such actions using a malicious program **120** on the computer **110** or on the Internet **130,** or using a computer attack from a hacker **140.** As a rule, such attacks involve searching for the router **100** itself, determining its version and known vulnerabilities for the given version, and carrying out the attack using an exploit.

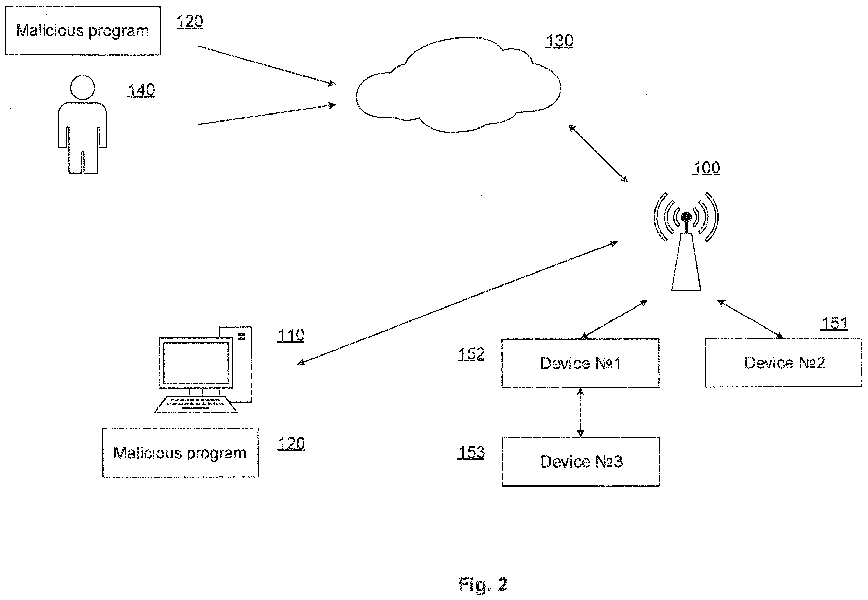

**Fig. 2** shows an example of a computer attack on smart devices. In **Fig. 2** as compared to **Fig. 1****,** smart devices are illustrated in the form of devices **151-153.** The attack vectors remain the same wheher the malicious program **120** on the computer **110** or via the Internet **130,** or using a computer attack from the hacker **140** are used. These attacks involve searching for one of the devices **151-153,** determining its version and known vulnerabilities for the given version, and carrying out the attack using an exploit.

As described herein, the smart devices can be connected not directly to the router **100,** but through another device - such as a smart watch via a smartphone. An example of such a connection might be the pairing of the smart watch Samsung Gear with the smartphone Samsung Galaxy. An API interface such as the Wearable Message API can be used for the link between the devices.

It should be appreciated that possible problems which may arise in the event that the hacker has successfully carried out the computer attack on the smart device. Here is a non-exhaustive list of such problems according to the conclusion of the Internet publication "The Wired" of December 2015:
- Obtaining control over a number of sub-assemblies of the Jeep Cherokee automobile, even including control of the speed;
- Control of certain medical devices in clinics, such as those which automatically administer medicine to patients;
- Even toys such as the latest versions of the Barbie doll with Wi-Fi support are vulnerable to computer attacks.

To be sure, the manufacturers of smart devices are trying to eliminate known vulnerabilities, but in a number of cases security is not a priority in the development of such devices. A solution is needed which can close up the vulnerabilities on routers and smart devices by means of their settings.

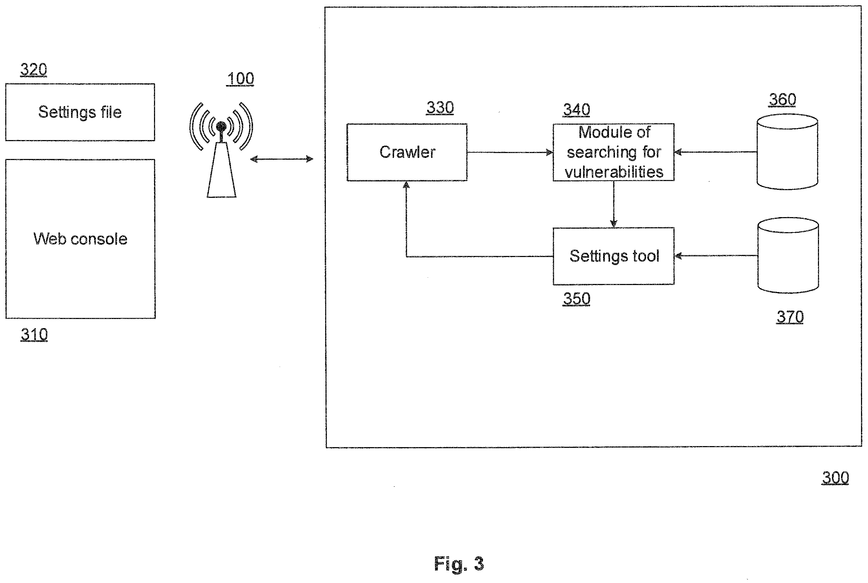

**Fig. 3** shows a block diagram of an example system. The system **300** for detecting and correcting of vulnerabilities of a router **100** includes the following modules: a crawler **330,** a module of searching for vulnerabilities **340,** a database of vulnerabilities **360,** a settings tool **350** and a settings database **370.**

According one example, the system for detecting and correcting of vulnerabilities includes the aforementioned module installed in the form of applications on a computer which is connected to the router **100.**

The crawler or search robot **330** is designed to sort through accessible objects in the network (such as computers, the router, smartphones and other devices connected to the network) using known network protocols (such as UDP). In the context of the description of **Fig. 3****,** it is assumed that the object in the network is a router **100.** The typical operation of the crawler **330** includes: sending a broadcast request through the network, obtaining a response from all accessible objects in the network and further analysis of them. Examples of a crawler include search robots of Google or Yandex.

The analysis of the object in the network by the crawler **330** includes the follow algorithm. Specifically, after the crawler **330** has obtained the list of all accessible objects in the network after the broadcast request, it tries to obtain access to an object by one method or another. The following are examples of such access:
- Web access. As a rule, if the object returns its address, such as 192.168.0.1, this may mean that the object is a router and one can gain access to it through the HTTP protocol.
- Access through the UPnP protocol.
- Access through the FTP protocol by the network address of the object in the network.
- Access through the remote administration protocol (RDP).
- Access by the SSH protocol.

The access to the object in a network may require authorization. The authorization may be performed both manually and automatically, when the crawler perform authorization using popular login/password groups (such as admin/admin, admin/1q2w3e, guest/guest and others) or through online automatic authentication techniques (such as Active Directory).

For example, in the case of access via UPnP, one may obtain the following data fields characterizing the router **100:**
- PKEY_PNPX_DeviceCategory
- PKEY_PNPX_Types
- PKEY_DeviceDisplay_FriendlyName
- PKEY_DeviceDisplay_Manufacturer
- PKEY_DeviceDisplay_ModelName
- PKEY_DeviceDisplay_ModelNumber
- PKEY_PNPX_PresentationUrl
- PKEY_PNPX_IpAddress
- PKEY_PNPX_XAddrs
- PKEY_Device_LocationInfo

The following provides an example of how the crawler **330** gains access to the web interface of the router **100.** The crawler **330** obtains the start web page (generally accessible at the address http://192.168.0.1) and begins to parse its elements according to the DOM model. DOM (Document Object Model) is an object model used for XML/HTML documents. Put simply, the DOM model is a representation of a document in the form of a tree of tags. This tree is formed by an embedded structure of tags plus text fragments of the page, each of which forms a separate node.

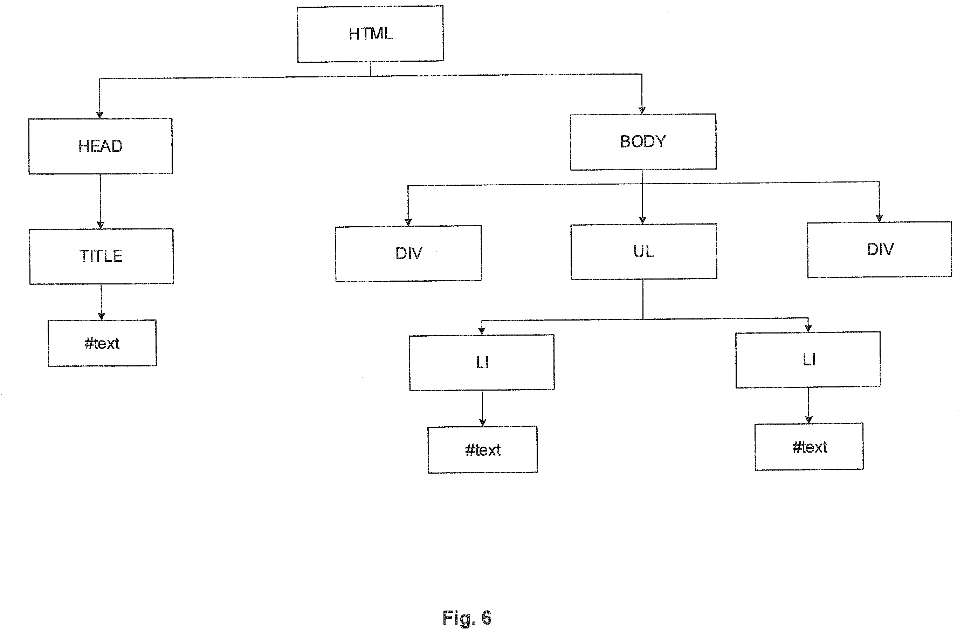

**Fig. 6** presents an example of the DOM model for an HTML page. The root node is the tag HTML, from which come the tags HEAD and BODY, which also have embedded tag nodes. By moving through the tree of the DOM model, one can find all necessary tags and determine their parameters (such as text for the tag TITLE).

The task of the crawler **330** is to search for all necessary tags in the DOM model of the web page obtained from the router **100.** Examples of the necessary tags are: "A", "FORM", "INPUT" and other tags which may contain the necessary information. For example, an important tag in the structure of the DOM model of the web page obtained from the router **100** will be a tag of the kind <a href="...">Administration</a>, which is a link to the page with the router settings and its access rights.

Following the link found in the body of the tag <a>, the crawler **330** arrives at another page, where once more a search is made for all necessary tags in the DOM model of the given web page. The moving through all pages by following all links can be done recursively, or it can be done only by following necessary links whose titles indicate the important settings. The titles of such links are: "Setup", "Wireless", "Administration", "Access Restrictions", "Management", "Network", "Security" and others.

Having gained access to an object in the network, the crawler **330** obtains a list of available resources in the router **100.** By resource, a parameter and/or attribute of the router which may be accessed and/or adjusted is meant. For example, in the case of access by FTP, this will be a set of paths to the file. In the case of access by the HTTP protocol, this may be a web page (or several web pages). The crawler **330** also determines open ports (such as 8080). The crawler **330** sends the obtained list of available resources to the module of searching for vulnerabilities **340.**

The module of searching for vulnerabilities **340** obtains the list of available resources and, using the database of vulnerabilities **360,** tries to determine the vulnerabilities associated with the given resources. The following are present examples of the rules for determining vulnerabilities which are kept in the aforementioned database.

### Rule 1.

Accessible resource (type of resource): network port.

Status of resource (port): 8080, open.

### Rule 2.

Accessible resource (type of resource): remote administration.

Status of resource: accessible.

### Rule 3.

Accessible resource (type of resource): access by SSH.

Status of resource: access allowed with administrator rights.

The following list provides examples of the main types of resources:
- Passwords,
- Remote administration,
- DNS settings,
- Network ports,
- Wi-Fi settings,
- Access by various protocols (SSH, Telnet, FTP, HTTP(S)),
- Firewall,
- Services such as IPTV and others.

The module of searching for vulnerabilities **340** compares each resource from the list of available resources with the rules from the database of vulnerabilities 360 for a match between the type of resource and its status. If a match is found, the module of searching for vulnerabilities **340** determines the resource found with a similar vulnerable status and sends the information on the vulnerable resources found and their status to the settings tool **350.**

The settings tool **350** uses the database of settings **370** to eliminate/repair the vulnerabilities in the vulnerable resources obtained from the module of searching for vulnerabilities **340.**

The database of settings **370** contains rules which are analogous to those kept in the database of vulnerabilities **360.** The following are examples of such rules.

### Rule A.

Accessible resource (type of resource): remote administration.

Status of resource: accessible.

Solution: remove possibility of remote administration via web interface or another settings option of the router **100.**

### Rule B.

Accessible resource (type of resource): access by SSH.

Status of resource: access allowed with administrator rights.

Solution: close access by SSH via web interface or another settings option of the router **100.**

### Rule C.

Accessible resource (type of resource): administrator password.

Status of resource: not resistant to brute force.

Solution: choose a stronger password (automatically generate a new password).

For the specific example it is evident that Rule 2 from the database of vulnerabilities **360** matches up with Rule "A" from the database of settings **370,** and Rule 3 with Rule "B" accordingly. The further adjustment consists in performing the actions indicated in the solution. The actions may be performed using the crawler **330.**

The solution will look like one of the options:
- Adjustment of the settings file of the router **100** by making changes in the file itself (for example, the SSH access line may look like "SSH connection = true", and its replacement consists in changing this line to "SSH connection = false").
- Adjustment through the web interface of the router **100.** This adjustment looks exactly the same as the circuit of the crawler **330** through the elements of the web pages, except in this case one searches for controlling elements such as <option>, <button>, <input> and others.

For example, in the case of abolishing the possibility of SSH access, there will be a search for the following elements (given as an example):

```
<select name = "ssh_connect">
           <option value="true">Enabled</option>
           <option value="false">Disabled</option>
          </select>
```

After which the element with value "false" will be selected.

Yet another example of adjustment of the router **100** consists in updating its firmware. In this case, the database of settings **370** contains, as solutions, versions of the firmware for the router **100** and the application of the solution consists in writing the firmware file to the router **100** using the crawler **330** and its subsequent execution (as an example, using the web interface of the router **100**).

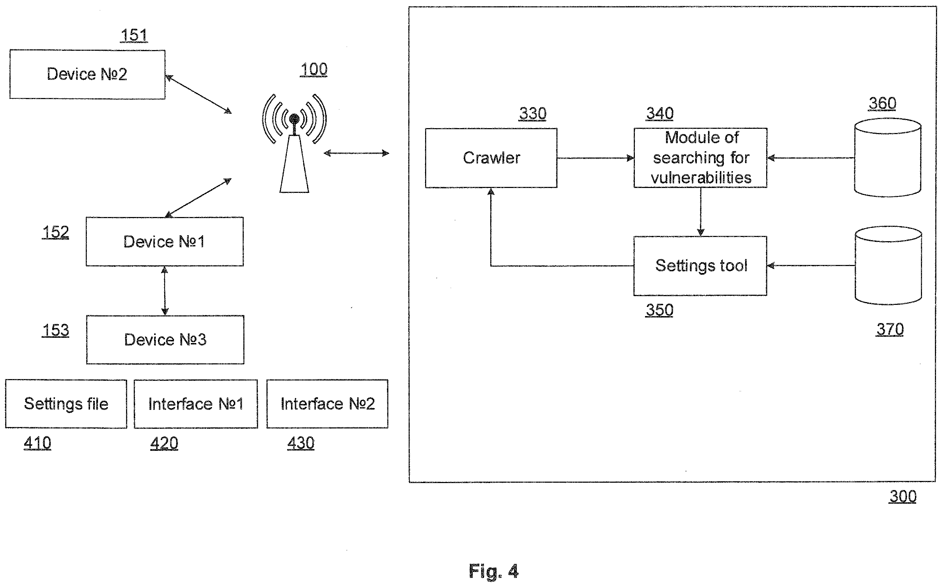

**Fig. 4** shows a block diagram of an example system with smart devices. As an illustration, **Fig. 4** differs little from **Fig. 3** with the exception of the adding of the devices **151-153** - smart devices. The smart devices can be the same things such as watches, lights, cameras, Dictaphones, wristbands, heart rate monitors and others which have access to the Internet (or a local area network) through various kinds of connections, such as Wi-Fi or Bluetooth. In the present case, they are connected to the router **100.** While the device **151** is connected directly to the Wi-Fi network of the router **100,** the device **153** is connected through the device **152.** An example of such a connection may be the pairing of the smart watch Samsung Gear (device **153**) to the smartphone Samsung Galaxy (device **152**)**.** The pairing can be done using a separate application, the installed Samsung Galaxy (device **152**).

The crawler **330** is designed to sort through the available objects in the network (such as the devices **151-153**) using known protocols (such as UDP). In the context of the description of **Fig. 4****,** it is assumed that the object in the network is one of the devices **151-153.** The general operation of the crawler **330** involves: sending a broadcast request through the network, obtaining a reply from all available objects in the network, and further analysis of them. For the sending of the broadcast request, the crawler **330** should be registered in the network provided by the router **100.** Thus, the first step is to detect the router **100** (as a device allowing access to the wireless Wi-Fi network) and to connect to this network, and only then send the broadcast request.

The analysis of the object in the network using the crawler **330** looks as follows. After the crawler **330** has obtained the list of all available objects in the network after the broadcast request, it tries to gain access to the object by one method or another. The following are examples of such access:
- Web access.
- Access through the UPnP protocol.
- Access through the FTP protocol by the network address of the object in the network.
- Access through the remote administration protocol (RDP).

The access to the object in a network may require authorization. The authorization can be performed both manually and automatically, when the crawler sorts through popular login/password groups (such as admin/admin, admin/1q2w3e, guest/guest and others) or through online automatic authentication techniques (such as Active Directory).

Having gained access to an object in the network, the crawler **330** obtains a list of available resources in one of the devices **151-153.** For example, in the case of access by FTP, this will be a set of file paths. In the case of access by the HTTP protocol, this may be a web page (or several web pages). The crawler **330** also determines open ports (such as 8080). The crawler **330** sends the obtained list of available resources to the module of searching for vulnerabilities **340.**

The module of searching for vulnerabilities **340** obtains the list of available resources and uses the database of vulnerabilities **360** to try and determine the vulnerabilities connected with the given resources. The module of searching for vulnerabilities **340** takes each resource from the list of available resources and compares it with rules from the database of vulnerabilities **360** for a match between the type of resource and its status. If a match is found, the module of searching for vulnerabilities **340** will define the resource found with a similar "vulnerable" status and send the information on the vulnerable resources found and their status to the settings tool **350.**

The settings tool **350** uses the database of settings **370** to repair the vulnerabilities in the vulnerable resources obtained from the module of searching for vulnerabilities **340.** The database of settings **370** contains rules which are analogous to those kept in the database of vulnerabilities **360.** A further adjustment consists in performing the actions indicated in the solution. The actions can be performed by the crawler **330.**

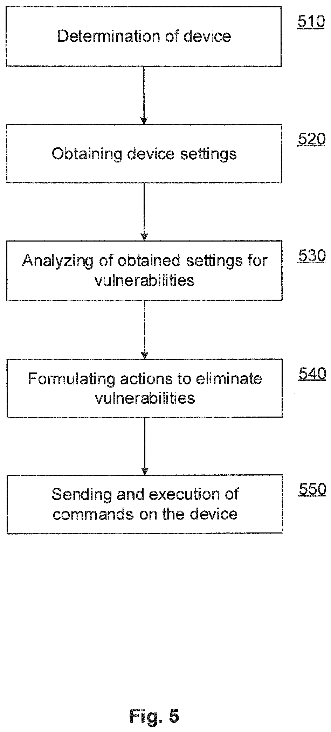

**Fig. 5** shows a flowchart for an example method. As shown, in step **510** there is a determination of a device which can be accessed (for example, by the crawler **330,** as described in detail for **Fig. 3** and **4**)**.** As was already described above, access can be obtained both to the router **100** and to the devices **151-153.** In the latter case, first of all there is a request for access to the network where the indicated devices are accessible. In step **520** there is a determination of the settings of the device (of both router **100** and devices **151-153**), which can also be done by the crawler **330.** In step **530** an analysis is made of the obtained settings for vulnerabilities by the module of searching for vulnerabilities **340,** after which in step **540** the settings tool **350** formulates a list of actions to eliminate the vulnerabilities found. In step **550** the crawler **330** performs the actions from the formulated list on the device.

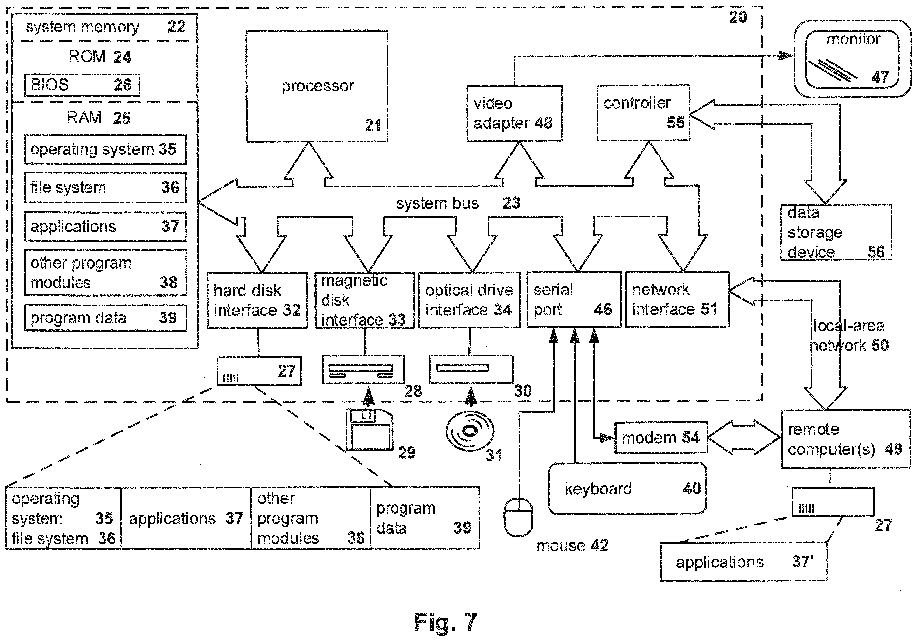

**Fig. 7** illustrates an example of a general-purpose computer system (which may be a personal computer or a server) on which the disclosed systems and method can be implemented. The computer system 20 includes a central processing unit 21, a system memory 22 and a system bus 23 connecting the various system components, including the memory associated with the central processing unit 21. The system bus 23 is realized like any bus structure known from the prior art, including in turn a bus memory or bus memory controller, a peripheral bus and a local bus, which is able to interact with any other bus architecture. The system memory includes read only memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, by a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate within a network environment, using a network connection to one or more remote computers 49. The remote computer (or computers) 49 are also personal computers or servers having the majority or all of the aforementioned elements in describing the nature of a personal computer 20, as shown in Fig. 7. Other devices can also be present in the computer network, such as routers, network stations, peer devices or other network nodes.

Network connections can form a local-area computer network (LAN) 50, such as a wired and/or wireless network, and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules, such as Bluetooth.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 3 above). Accordingly, each module can be realized in a variety of suitable configurations, and should not be limited to any example implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein. The scope of the invention is defined by the appended claims.

## Claims

1. A computer-implemented method for eliminating vulnerabilities on a data network including a router for directing data in the data network, the method comprising:
transmitting, by a crawler (330) executing on a computer, a broadcast request through the data network to obtain access to at least one device (100, 151-153) communicatively coupled to the data network;
accessing, by the crawler (330), a web interface of at least one device wherein the web interface comprises at least one web page containing parameters and attributes of the at least one device;
obtaining, by the crawler (330), using the web interface a list of available resources of the at least one device that can be remotely accessed or adjusted, wherein the list of available resources includes one or both of a parameter or an attribute of the at least one device;
comparing, by the crawler (330), each of the available resources of the at least one device with resource rules in a database (360) to identify at least one network vulnerability of the at least one device by identifying a resource with a similar vulnerable status in the database;
determining, by the crawler, an action for repairing the at least one network vulnerability associated with the one available resource of the at least one device based on comparing of each of the available resources with the resource rules in the database to identify the resource with the similar vulnerable status in the database; and
transmitting, by the crawler, instructions to the at least one device to perform the action for repairing the at least one network vulnerability associated with the one available resource by adjusting the device through the web interface of the device.

2. The method according to claim 1, wherein the at least one device is the router (100) on the data network, the method further comprising:
accessing the web interface of the router by obtaining at least one web page and parsing HyperText Markup Language (HTML) elements of the web page based on a document object model, wherein the web page comprises router settings and access rights; and
extracting text from the HTML elements containing the router settings and access rights to obtain the list of available resources of the router.

3. The method according to claim 1, wherein transmitting instructions to the router for repairing the at least one network vulnerability:
accessing a configuration file stored on the router that contains the router settings of the router; and
adjusting at least one value of the router setting of the router by changing the configuration file.

4. The method according to claim 2, further comprising:
adjusting the router setting through the web interface of the router by modifying the web page using the document object model to select an HTML control element corresponding to at least one parameter or attribute of the router.

5. The method according to any of claims 1-4, further comprising:
accessing, by the crawler (330), the at least one device communicatively coupled to the data network, wherein the accessing, by the processor, of the at least one device comprises at least one of obtaining web access to the at least one device, accessing the at least one device device through a universal plug and play protocol, accessing the at least one device through a file transfer by a network address of the at least one device in the data network; accessing the at least one device through a remote administration protocol, and accessing the at least one device by a secure shell protocol.

6. The method according to any of claims 1-5, wherein the transmitting of the broadcast request through the data network comprises transmitting the request to the router that redirects the request to a plurality of devices communicatively coupled to the data network via the router.

7. The method according to any of claims 1-6, wherein the list of available resources includes at least one of passwords, remote administration, domain name system settings, network ports, Wi-Fi settings, and installed firewalls.

8. A system for eliminating vulnerabilities on a data network including a router for directing data in the data network, the system comprising:
at least one database (360, 370) that stores resource rules relating to network vulnerabilities and actions for repairing the network vulnerabilities; and
a computer (20) configured to:
transmit, by a crawler (330), a broadcast request through the data network to obtain access to at least one device (100, 151-153),
access a web interface of the at least one device, wherein the web interface comprises at least one web page containing parameters and attributes of the at least one device;
obtaining using the web interface a list of available resources of the at least one device that can be remotely accessed or adjusted by the crawler, wherein the list of available resources includes one or both of a parameter or an attribute of the at least one device,
compare each of the available resources of the at least one device with resource rules in the at least one database (360) to identify at least one network vulnerability of the at least one device by identifying a resource with a similar vulnerable status in the database,
identify the action for repairing the at least one network vulnerability based on the comparison, and
transmit instructions to the at least one device to perform the action for repairing the at least one network vulnerability associated with the one available resource by adjusting the device through the web interface of the device.

9. The system according to claim 8, wherein the at least one device is the router (100) in the data network, the computer is further configured to:
access the web interface of the router by obtaining the at least one web page and parsing elements of the web page based on a document object model, wherein the at least one web page comprises router settings and access rights, and
extract text from the HTML elements containing the router settings and access rights to obtain the list of available resources of the router.

10. The system according to claims 9, wherein the computer (20)configured to transmit instructions to the router for repairing the at least one network vulnerability is further configured to:
access a configuration file stored on the router (100) that contains the router settings; and
adjust at least one value of the router settings by changing the configuration file.

11. The system according to claim 9, wherein the computer is further configured to adjust the router by modifying the web page using the document object model to select an HTML control element corresponding to at least one parameter or attribute of the router.

12. The system according to any of claims 8-11, wherein the computer is further configured to:
access the at least one device by at least one of obtaining web access to the at least one device, accessing the at least one device through a universal plug and play protocol, accessing the at least one device through a file transfer by a network address of the at least one device in the data network; accessing the at least one device through a remote administration protocol, and accessing the at least one device by a secure shell protocol.

13. The system according to any of claims 8-12, wherein the computer (20) is further configured to transmit the broadcast request through the data network by transmitting the broadcast request to the router (100) that redirects the broadcast request to a plurality of devices (151-153) communicatively coupled to the data network via the router.

14. The system according to any of claims 8-13, wherein the list of available resources includes at least one of passwords, remote administration, domain name system settings, network ports, Wi-Fi settings, and installed firewalls.

## Patentansprüche

1. Computerimplementiertes Verfahren zum Eliminieren von Schwachstellen bzw. Sicherheitslücken in einem Datennetzwerk, enthaltend einen Router zum Leiten bzw. Lenken von Daten in dem Datennetzwerk, wobei das Verfahren umfasst:
Übertragen, durch einen Crawler (330), der auf einem Computer ausführt bzw. ausgeführt wird, einer Broadcast-Anfrage durch das Datennetzwerk, um Zugriff auf zumindest eine Vorrichtung (100, 151-153) zu erhalten, die kommunikativ mit dem Datennetzwerk gekoppelt ist;
Zugreifen, durch den Crawler (330), auf eine Webschnittstelle zumindest einer Vorrichtung, wobei die Webschnittstelle zumindest eine Webseite umfasst, die Parameter und Attribute der zumindest eine Vorrichtung enthält;
Erhalten, durch den Crawler (330), unter Verwendung der Webseite, einer Liste von verfügbaren Ressourcen der zumindest einen Vorrichtung, auf die entfernt zugegriffen oder die entfernt eingestellt werden kann, wobei die Liste von verfügbaren Ressourcen eines oder beide eines Parameters oder eines Attributs der zumindest einen Vorrichtung enthält;
Vergleichen, durch den Crawler (330), jeder der verfügbaren Ressourcen der zumindest einen Vorrichtung mit Ressourcenregeln in einer Datenbank (360), um zumindest eine Netzwerkschwachstelle bzw. -sicherheitslücke der zumindest einen Vorrichtung zu identifizieren, und zwar durch Identifizieren einer Ressource mit einem ähnlichen Schwachstellen- bzw. Sicherheitslückenstatus in der Datenbank;
Bestimmen, durch den Crawler, einer Aktion zum Reparieren der zumindest einen Netzwerkschwachstelle, die mit der einen verfügbaren Ressource der zumindest einen Vorrichtung assoziiert bzw. verknüpft ist, basierend auf dem Vergleichen jeder der verfügbaren Ressourcen mit den Ressourcenregeln in der Datenbank, um die Ressource mit dem ähnlichen Schwachstellenstatus in der Datenbank zu identifizieren; und
Übertragen, durch den Crawler, von Anweisungen an die zumindest eine Vorrichtung, um die Aktion zum Reparieren der zumindest einen Netzwerkschwachstelle durchzuführen, die mit der einen verfügbaren Ressource verknüpft ist, und zwar durch Einstellen der Vorrichtung durch die Webschnittstelle der Vorrichtung.

2. Verfahren nach Anspruch 1, wobei die zumindest eine Vorrichtung der Router (100) in dem Datennetzwerk ist, wobei das Verfahren ferner umfasst:
Zugreifen auf die Webschnittstelle des Routers durch Erhalten zumindest einer Webseite und Parsen von HyperText Markup Language (HTML)-Elementen der Webseite basierend auf einem Dokumentobjektmodell, wobei die Webseite Router-Einstellungen und Zugriffsrechte umfasst; und
Extrahieren von Text aus den HTML-Elementen enthaltend die Router-Einstellungen und Zugriffsrechte, um die Liste von verfügbaren Ressourcen des Routers zu erhalten.

3. Verfahren nach Anspruch 1, wobei das Übertragen von Anweisungen an den Router zum Reparieren der zumindest einen Netzwerkschwachstelle:
Zugreifen auf eine Konfigurationsdatei, die in dem Router gespeichert ist, welche die Router-Einstellungen des Routers enthält; und
Einstellen des zumindest einen Werts der Router-Einstellung des Routers durch Ändern der Konfigurationsdatei.

4. Verfahren nach Anspruch 2, ferner umfassend:
Einstellen der Router-Einstellung über die Webschnittstelle des Routers durch Modifizieren der Webseite unter Verwendung des Dokumentobjektmodells, um ein HTML-Steuerelement auszuwählen, das zumindest einem Parameter oder Attribut des Routers entspricht.

5. Verfahren nach einem der Ansprüche 1 bis 4, ferner umfassend:
Zugreifen, durch den Crawler (330), auf die zumindest eine Vorrichtung, die kommunikativ mit dem Datennetzwerk gekoppelt ist, wobei das Zugreifen, durch den Prozessor, auf die zumindest eine Vorrichtung zumindest eines umfasst: Erhalten eines Webzugriffs auf die zumindest eine Vorrichtung, Zugreifen auf die zumindest eine Vorrichtung durch ein universelles Plug-and-Play-Protokoll, Zugreifen auf die zumindest eine Vorrichtung durch eine Dateiübertragung durch eine Netzwerkadresse der zumindest einen Vorrichtung in dem Datennetzwerk, Zugreifen auf die zumindest eine Vorrichtung durch ein Fernverwaltungsprotokoll und Zugreifen auf die zumindest eine Vorrichtung durch ein Secure Shell Protokoll.

6. Verfahren nach einem der Ansprüche 1 bis 5, wobei das Übertragen der Broadcast-Anfrage durch das Datennetzwerk das Übertragen der Anfrage an den Router umfasst, der die Anfrage zu einer Mehrzahl von Vorrichtungen umleitet, die kommunikativ über den Router mit dem Datennetzwerk gekoppelt sind.

7. Verfahren nach einem der Ansprüche 1 bis 6, wobei die Liste von verfügbaren Ressourcen zumindest eines enthält: Passwörter, Fernverwaltung, Domänennamensystemeinstellungen, Netzwerkports, Wi-Fi-Einstellungen und installierte Firewalls.

8. System zum Eliminieren von Schwachstellen bzw. Sicherheitslücken in einem Datennetzwerk, enthaltend einen Router zum Leiten bzw. Lenken von Daten in dem Datennetzwerk, wobei das System umfasst:
zumindest eine Datenbank (360, 370), die Ressourcenregeln betreffend Netzwerkschwachstellen bzw. -sicherheitslücken und Aktionen zum Reparieren der Netzwerkschwachstellen speichert; und
einen Computer (20) konfiguriert zum:
Übertragen, durch einen Crawler (330), einer Broadcast-Anfrage durch das Datennetzwerk, um Zugriff auf zumindest eine Vorrichtung (100, 151-153) zu erhalten;
Zugreifen auf eine Webschnittstelle zumindest einer Vorrichtung, wobei die Webschnittstelle zumindest eine Webseite umfasst, die Parameter und Attribute der zumindest eine Vorrichtung enthält;
Erhalten, unter Verwendung der Webseite, einer Liste von verfügbaren Ressourcen der zumindest einen Vorrichtung, auf die entfernt zugegriffen oder die entfernt eingestellt werden kann, und zwar durch den Crawler, wobei die Liste von verfügbaren Ressourcen eines oder beide eines Parameters oder eines Attributs der zumindest einen Vorrichtung enthält;
Vergleichen jeder der verfügbaren Ressourcen der zumindest einen Vorrichtung mit Ressourcenregeln in der zumindest einen Datenbank (360), um zumindest eine Netzwerkschwachstelle bzw. -sicherheitslücke der zumindest einen Vorrichtung zu identifizieren, und zwar durch Identifizieren einer Ressource mit einem ähnlichen Schwachstellen- bzw. Sicherheitslückenstatus in der Datenbank;
Identifizieren der Aktion zum Reparieren der zumindest einen Netzwerkschwachstelle basierend auf dem Vergleich, und
Übertragen von Anweisungen an die zumindest eine Vorrichtung, um die Aktion zum Reparieren der zumindest einen Netzwerkschwachstelle durchzuführen, die mit der einen verfügbaren Ressource verknüpft ist, und zwar durch Einstellen der Vorrichtung durch die Webschnittstelle der Vorrichtung.

9. System nach Anspruch 8, wobei die zumindest eine Vorrichtung der Router (100) in dem Datennetzwerk ist, wobei der Computer ferner konfiguriert ist zum:
Zugreifen auf die Webschnittstelle des Routers durch Erhalten zumindest einer Webseite und Parsen von Elementen der Webseite basierend auf einem Dokumentobjektmodell, wobei die zumindest eine Webseite Router-Einstellungen und Zugriffsrechte umfasst; und
Extrahieren von Text aus den HTML-Elementen enthaltend die Router-Einstellungen und Zugriffsrechte, um die Liste von verfügbaren Ressourcen des Routers zu erhalten.

10. System nach Anspruch 9, wobei der Computer (20), der konfiguriert ist zum Übertragen von Anweisungen an den Router zum Reparieren der zumindest einen Netzwerkschwachstelle, ferner konfiguriert ist zum:
Zugreifen auf eine Konfigurationsdatei, die in dem Router (100) gespeichert ist, welche die Router-Einstellungen des Routers enthält; und
Einstellen des zumindest einen Werts der Router-Einstellungen durch Ändern der Konfigurationsdatei.

11. System nach Anspruch 9, wobei der Computer ferner konfiguriert ist zum Einstellen des Routers durch Modifizieren der Webseite unter Verwendung des Dokumentobjektmodells, um ein HTML-Steuerelement auszuwählen, das zumindest einem Parameter oder Attribut des Routers entspricht.

12. System nach einem der Ansprüche 8 bis 11, wobei der Computer ferner konfiguriert ist zum:
Zugreifen auf die zumindest eine Vorrichtung durch zumindest eines von: Erhalten eines Webzugriffs auf die zumindest eine Vorrichtung, Zugreifen auf die zumindest eine Vorrichtung durch ein universelles Plug-and-Play-Protokoll, Zugreifen auf die zumindest eine Vorrichtung durch eine Dateiübertragung durch eine Netzwerkadresse der zumindest einen Vorrichtung in dem Datennetzwerk, Zugreifen auf die zumindest eine Vorrichtung durch ein Fernverwaltungsprotokoll und Zugreifen auf die zumindest eine Vorrichtung durch ein Secure Shell Protokoll.

13. System nach einem der Ansprüche 8 bis 12, wobei der Computer (20) ferner konfiguriert ist zum Übertragen der Broadcast-Anfrage durch das Datennetzwerk durch Übertragen der Broadcast-Anfrage an den Router (100), der die Broadcast-Anfrage zu einer Mehrzahl von Vorrichtungen (151-153) umleitet, die kommunikativ über den Router mit dem Datennetzwerk gekoppelt sind.

14. System nach einem der Ansprüche 8 bis 13, wobei die Liste von verfügbaren Ressourcen zumindest eines enthält: Passwörter, Fernverwaltung, Domänennamensystemeinstellungen, Netzwerkports, Wi-Fi-Einstellungen und installierte Firewalls.

## Revendications

1. Procédé mis en oeuvre par ordinateur permettant d'éliminer des vulnérabilités sur un réseau de données incluant un routeur pour diriger des données dans le réseau de données, le procédé comprenant :
la transmission, par un collecteur (330) s'exécutant sur un ordinateur, d'une demande de diffusion par le biais du réseau de données pour obtenir un accès à au moins un dispositif (100, 151-153) couplé de manière à communiquer avec le réseau de données ;
l'accès, par le collecteur (330), à une interface Web d'au moins un dispositif dans lequel l'interface Web comprend au moins une page Web contenant des paramètres et des attributs de l'au moins un dispositif ;
l'obtention, par le collecteur (330), en utilisant l'interface Web, d'une liste de ressources disponibles de l'au moins un dispositif auquel il est possible d'accéder ou qu'il est possible d'ajuster à distance, dans lequel la liste de ressources disponibles inclut un ou les deux parmi un paramètre ou un attribut de l'au moins un dispositif ;
la comparaison, par le collecteur (330), de chacune des ressources disponibles de l'au moins un dispositif avec des règles de ressources dans une base de données (360) pour identifier au moins une vulnérabilité de réseau de l'au moins un dispositif en identifiant une ressource avec un statut vulnérable similaire dans la base de données ;
la détermination, par le collecteur, d'une action pour réparer l'au moins une vulnérabilité de réseau associée à la ressource disponible de l'au moins un dispositif sur la base de la comparaison de chacune des ressources disponibles avec les règles de ressources dans la base de données pour identifier la ressource avec le statut vulnérable similaire dans la base de données ; et
la transmission, par le collecteur, d'instructions à l'au moins un dispositif pour accomplir l'action pour réparer l'au moins une vulnérabilité de réseau associée à la ressource disponible en ajustant le dispositif par le biais de l'interface Web du dispositif.

2. Procédé selon la revendication 1, dans lequel l'au moins un dispositif est le routeur (100) sur le réseau de données, le procédé comprenant en outre :
l'accès à l'interface Web du routeur en obtenant au moins une page Web et en analysant des éléments de langage de balisage hypertexte (HTML) de la page Web sur la base d'un modèle objet de documents, dans lequel la page Web comprend des réglages de routeur et des droits d'accès ; et
l'extraction de texte à partir des éléments HTML contenant les réglages de routeur et droits d'accès pour obtenir la liste de ressources disponibles du routeur.

3. Procédé selon la revendication 1, dans lequel la transmission d'instructions au routeur pour réparer l'au moins une vulnérabilité de réseau :
l'accès à un fichier de configuration stocké sur le routeur qui contient les réglages de routeur du routeur ; et
l'ajustement d'au moins une valeur du réglage de routeur du routeur en changeant le fichier de configuration.

4. Procédé selon la revendication 2, comprenant en outre :
l'ajustement du réglage du routeur par le biais de l'interface Web du routeur en modifiant la page Web en utilisant le modèle objet de documents pour sélectionner un élément de commande HTML correspondant à au moins un paramètre ou attribut du routeur.

5. Procédé selon l'une quelconque des revendications 1 à 4, comprenant en outre :
l'accès, par le collecteur (330), à l'au moins un dispositif couplé de manière à communiquer avec le réseau de données, dans lequel l'accès, par le processeur, de l'au moins un dispositif comprend au moins un parmi l'obtention d'un accès Web à l'au moins un dispositif, l'accès à l'au moins un dispositif par le biais d'un protocole UPnP, l'accès à l'au moins un dispositif par le biais d'un transfert de fichier par une adresse de réseau de l'au moins un dispositif dans le réseau de données ; l'accès à l'au moins un dispositif par le biais d'un protocole d'administration à distance, et l'accès à l'au moins un dispositif par un protocole SSH.

6. Procédé selon l'une quelconque des revendications 1 à 5, dans lequel la transmission de la demande de diffusion par le biais du réseau de données comprend la transmission de la demande au routeur qui redirige la demande vers une pluralité de dispositifs couplés de manière à communiquer avec le réseau de données via le routeur.

7. Procédé selon l'une quelconque des revendications 1 à 6, dans lequel la liste de ressources disponibles inclut au moins un parmi des mots de passe, une administration à distance, des réglages de système de noms de domaine, des ports de réseau, des réglages Wi-Fi, et des pare-feu installés.

8. Système permettant d'éliminer des vulnérabilités sur un réseau de données incluant un routeur permettant de diriger des données dans le réseau de données, le système comprenant :
au moins une base de données (360, 370) qui stocke des règles de ressources concernant des vulnérabilités de réseau et des actions pour réparer les vulnérabilités de réseau ; et
un ordinateur (20) configuré pour :
transmettre, par l'intermédiaire d'un collecteur (330), une demande de diffusion par le biais du réseau de données pour obtenir un accès à au moins un dispositif (100, 151-153),
accéder à une interface Web de l'au moins un dispositif, dans lequel l'interface Web comprend au moins une page Web contenant des paramètres et des attributs de l'au moins un dispositif ;
obtenir en utilisant l'interface Web une liste de ressources disponibles de l'au moins un dispositif auquel il est possible d'accéder ou qu'il est possible d'ajuster à distance par l'intermédiaire du collecteur, dans lequel la liste de ressources disponibles inclut un ou les deux parmi un paramètre ou un attribut de l'au moins un dispositif,
comparer chacune des ressources disponibles de l'au moins un dispositif avec des règles de ressources dans l'au moins une base de données (360) pour identifier au moins une vulnérabilité de réseau de l'au moins un dispositif en identifiant une ressource avec un statut vulnérable similaire dans la base de données,
identifier l'action pour réparer l'au moins une vulnérabilité de réseau sur la base de la comparaison, et
transmettre des instructions à l'au moins un dispositif pour accomplir l'action permettant de réparer l'au moins une vulnérabilité de réseau associée à la ressource disponible en ajustant le dispositif par le biais de l'interface Web du dispositif.

9. Système selon la revendication 8, dans lequel l'au moins un dispositif est le routeur (100) dans le réseau de données, l'ordinateur est en outre configuré pour :
accéder à l'interface Web du routeur en obtenant l'au moins une page Web et en analysant des éléments de la page Web sur la base d'un modèle objet de documents, dans lequel l'au moins une page Web comprend des réglages de routeur et des droits d'accès, et
extraire du texte à partir des éléments HTML contenant les réglages de routeur et droits d'accès pour obtenir la liste de ressources disponibles du routeur.

10. Système selon la revendication 9, dans lequel l'ordinateur (20) configuré pour transmettre des instructions au routeur pour réparer l'au moins une vulnérabilité de réseau est en outre configuré pour :
accéder à un fichier de configuration stocké sur le routeur (100) qui contient les réglages de routeur ; et
ajuster au moins une valeur des réglages de routeur en changeant le fichier de configuration.

11. Système selon la revendication 9, dans lequel l'ordinateur est en outre configuré pour ajuster le routeur en modifiant la page Web en utilisant le modèle objet de documents pour sélectionner un élément de commande HTML correspondant à au moins un paramètre ou attribut du routeur.

12. Système selon l'une quelconque des revendications 8 à 11, dans lequel l'ordinateur est en outre configuré pour :
accéder à l'au moins un dispositif par l'intermédiaire d'au moins un parmi l'obtention d'un accès Web à l'au moins un dispositif, l'accès à l'au moins un dispositif par le biais d'un protocole UPnP, l'accès à l'au moins un dispositif par le biais d'un transfert de fichier par une adresse de réseau de l'au moins un dispositif dans le réseau de données ; l'accès à l'au moins un dispositif par le biais d'un protocole d'administration à distance, et l'accès à l'au moins un dispositif par un protocole SSH.

13. Système selon l'une quelconque des revendications 8 à 12, dans lequel l'ordinateur (20) est en outre configuré pour transmettre la demande de diffusion par le biais du réseau de données en transmettant la demande de diffusion au routeur (100) qui redirige la demande de diffusion vers une pluralité de dispositifs (151-153) couplés de manière à communiquer avec le réseau de données via le routeur.

14. Système selon l'une quelconque des revendications 8 à 13, dans lequel la liste de ressources disponibles inclut au moins un parmi des mots de passe, une administration à distance, des réglages de système de noms de domaine, des ports de réseau, des réglages Wi-Fi, et des pare-feu installés.
